# EUROPÄISCHE PATENTSCHRIFT

(11) **EP 1 218 124 B1**
(45) Veröffentlichungstag und Bekanntmachung des Hinweises auf die Patenterteilung: **05.11.2003**
(21) Anmeldenummer: 00934996.0
(22) Anmeldetag: 10.05.2000
(51) Int. Cl.: B21J 13/08

(54) **VORRICHTUNG ZUM UMFORMEN VON LÄNGLICHEN ELEMENTEN**
DEVICE FOR FORMING LONGITUDINAL ELEMENTS
DISPOSITIF DE FA ONNAGE D'ELEMENTS LONGITUDINAUX

(30) Priorität: 28.08.1999 DE 29915106 U
(43) Veröffentlichungstag der Anmeldung: 03.07.2002
(73) Patentinhaber: Rosenberger AG, 99510 Apolda (DE)
(72) Erfinder: Rosenberger, Gerhard, 78148 Gütenbach (DE)
(74) Vertreter: Weiss, Peter, Dr. rer. nat.
(86) Internationale Anmeldenummer: EP0004159
(87) Internationale Veröffentlichungsnummer: WO01015831

(56) Entgegenhaltungen:
- EP-A- 0 842 718
- US-A- 1 421 507
- PATENT ABSTRACTS OF JAPAN vol. 011, no. 323 (M-634), 21. Oktober 1987 (1987-10-21) -& JP 62 107824 A (CHUO DENKI SEISAKUSHO:KK), 19. Mai 1987 (1987-05-19)
- PATENT ABSTRACTS OF JAPAN vol. 011, no. 323 (M-634), 21. Oktober 1987 (1987-10-21) -& JP 62 107829 A (CHUO DENKI SEISAKUSHO:KK), 19. Mai 1987 (1987-05-19)
- PATENT ABSTRACTS OF JAPAN vol. 016, no. 299 (M-1274), 2. Juli 1992 (1992-07-02) -& JP 04 081239 A (FUJI XEROX CO LTD), 13. März 1992 (1992-03-13)

## Beschreibung

Die Erfindung betrifft eine Vorrichtung zum axialen Umformen der Enden von länglichen Elementen, insbesondere von Rohren und Stangen, welche eingespannt in einer Spanneinrichtung gehalten sind, mittels zumindest einem Werkzeug, dem ein Umformantrieb zugeordnet ist, wobei zwischen dem Umformantrieb und der Spanneinrichtung ein Werkzeugwechsler vorgesehen ist.

In vielen Anwendungsfällen müssen Rohre oder Stangen, wozu nicht nur Rund-, sondern auch Mehrkantstangen zählen, bearbeitet werden. Beispielsweise müssen die Enden von Rohren aufgeweitet oder verengt werden, oder die Enden von Stangen müssen bearbeitet werden, wozu bspw. das Planen, Innen- und Aussenfasen, Ausdrehen, Formbohren, Radiusdrehen, Überdrehen, Anspitzen, Planstechen, Kuppen usw. gehört. All diese Bearbeitungsvorgänge erfordern eine Bearbeitungseinrichtung, welche meist aus einem Bohrständer od. dgl. besteht. Das längliche Element wird dabei in einen Spannstock eingespannt und die Bearbeitung des länglichen Elements von Hand mittels dem Bohrständer vorgenommen.

Eine andere Möglichkeit ist das Bearbeiten des länglichen Elementes mittels einer entsprechenden Drehbank wobei jedoch immer nur ein Arbeitsschritt durchgeführt werden kann.

Die JP A 62 107824 beschreibt eine Vorrichtung zum axialen Umformen der Enden von länglichen Rohren, welche in einer Spanneinrichtung einspannbar sind. Dabei lässt sich mittels eines Werkzeuges das Rohr mittels eines Umformantriebes umformen. Diese Vorrichtung weist einen vertikal bewegbaren Werkzeugwechsler auf. Nachteilig ist, dass das Einspannen der zu bearbeitenden Werkstücke langsam erfolgt und lediglich begrenzte Einspannkräfte möglich sind.

Die US 1,421,507 beschreibt eine Vorrichtung zum Umformen von Rohrenden, bei welcher mittels einer Spannzange das Rohrende eingespannt wird und mittels einer Umformeinrichtung von Innen nach Aussen ein Rohrende umgeformt wird. Dabei erfolgt das Einspannen des Rohrendes aufwendig in einer herkömmlichen Spannzange.

Der vorliegenden Erfindung liegt die Aufgabe zugrunde, eine Vorrichtung der oben genannten Art zu schaffen, mittels der ein Umformen von länglichen Elementen, insbesondere von Rohren und Stangen, auf vielfältige Art und Weise in einer einzigen Maschine durchgeführt werden kann.

Zur Lösung dieser Aufgabe führt, dass die Spanneinrichtung Spannbacken aufweist, wobei zumindest eine davon mit einer Kniehebeleinrichtung verbunden ist.

Dieser Werkzeugwechsler hat den Vorteil, dass an ihm eine Mehrzahl von Werkzeugen vorgesehen ist, so dass an dem eingespannten länglichen Element eine Mehrzahl von Bearbeitungsvorgängen stattfinden kann. Das längliche Element muss nicht bei jedem Bearbeitungsschritt aus der Spanneinrichtung entnommen werden.

Damit ein Werkzeugwechsel stattfinden kann, sollte das Werkzeug mit dem Umformantrieb leicht koppelbar sein. In einem bevorzugten Ausführungsbeispiel der Erfindung ist daran gedacht, dass eine einfach entsprechende Kupplung aus einer T-förmigen Nut in einer Kupplungsstange besteht, wobei das Werkzeug mit einem entsprechend geformten Nutstein in die T-Nut eingreift. Selbstverständlich gibt es hier auch andere Möglichkeiten von Kupplungen, die im Rahmen der Erfindung liegen sollen.

Bevorzugt ist im übrigen diese Kupplungsstange an einem Schlitten festgelegt, mit dem die Kupplungsstange und mit der Kupplungsstange auch das Werkzeug verschiebbar angeordnet ist. Hierdurch ist es möglich, das Werkzeug mit einem eigenen Umformstempel an das längliche Element heranzubringen.

Das ganze Verschieben des Schlittens geschieht bevorzugt mittels eines pneumatischen oder hydraulischen Antriebs, wobei die Kupplungsstange selbst als Kolbenstange ausgebildet sein kann, die in einem entsprechenden Zylinder, der sich gegen ein Maschinengestell abstützt, bewegbar angeordnet ist.

Bevorzugt sitzt auch der Umformantrieb selbst auf diesem Schlitten auf und ist somit zusammen mit dem Schlitten bewegbar. Der Umformantrieb soll als Servomotor ausgestaltet sein, wobei seine Drehbewegung über ein entsprechendes Getriebe auf einen Zahnriemen übertragen wird, der wiederum die Bewegung auf eine Zahnriemenscheibe überträgt, die auf der Kupplungsstange festliegt.

Bevorzugt soll der Werkzeugwechsler vertikal bewegbar angeordnet sein, da auf diese Art und Weise wenig Platz in Anspruch genommen wird. Hierzu wird der Werkzeugwechsler in einem entsprechenden Rahmen geführt und ist über eine Spindel mit einem Spindelantrieb verbunden. Die Werkzeuge selbst sitzen in entsprechenden Gleithülsen in dem Werkzeugwechsler, sodass sie in horizontaler Richtung auf das zu bearbeitende Element hin verschoben werden können.

Auch die Spanneinrichtung ist pneumatisch bzw. hydraulisch angetrieben ausgestaltet. Hierzu sind zwei Druckzylinder und eine Kniehebelanordnung vorgesehen, welche eine Spannbacke bewegen. Ein Druckzylinder ist vorgesehen, um die grundsätzliche Öffnungsweite der Spannbacken zu bestimmen, der andere Druckzylinder bringt die erforderliche Spannkraft auf, wobei diese Spannkraft über eine dreiecksförmige Drucklasche und einen Hebel auf die Spannbacke übertragen wird.

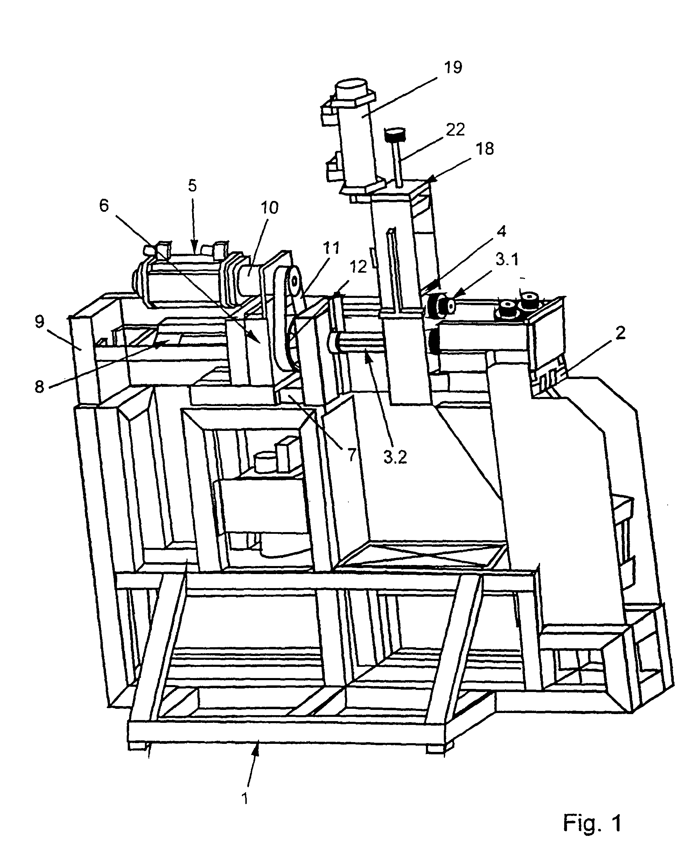

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines Ausführungsbeispieles einer erfindungsgemässen Vorrichtung zum Umformen von länglichen Elementen;
Figur 2 eine teilweise im Längsschnitt dargestellte Seitenansicht der Vorrichtung gemäss Figur 1;
Figur 3 eine perspektivische Ansicht eines Umformantriebes auf einem Schlitten mit einer Kupplungsstange;
Figur 4 eine perspektivische Ansicht eines Ausführungsbeispieles eines erfindungsgemässen Werkzeugwechslers.

Eine erfindungsgemässe Vorrichtung zum Umformen von länglichen Elementen, insbesondere von Rohren und Stangen, weist einen Maschinenrahmen 1 auf. Die umzuformenden Elemente werden von einer Spanneinrichtung 2 gehalten, der Werkzeuge 3.1 und 3.2 an einem Werkzeugwechsler 4 zugeordnet sind.

Zum Antrieb der Werkzeuge 3.1 bzw. 3.2 ist ein Umformantrieb 5 vorgesehen, der bevorzugt als Servomotor ausgebildet ist. Dieser Umformantrieb 5 liegt an einem Schlitten 6 fest, der wiederum an Führungen 7 des Maschinenrahmens 1 geführt ist. Die Bewegungen des Schlitten 6 an den Führungen 7 bewirkt ein hydraulischer oder pneumatischer Antrieb 8, der sich gegenüber einer rückwärtigen Platte 9 abstützt.

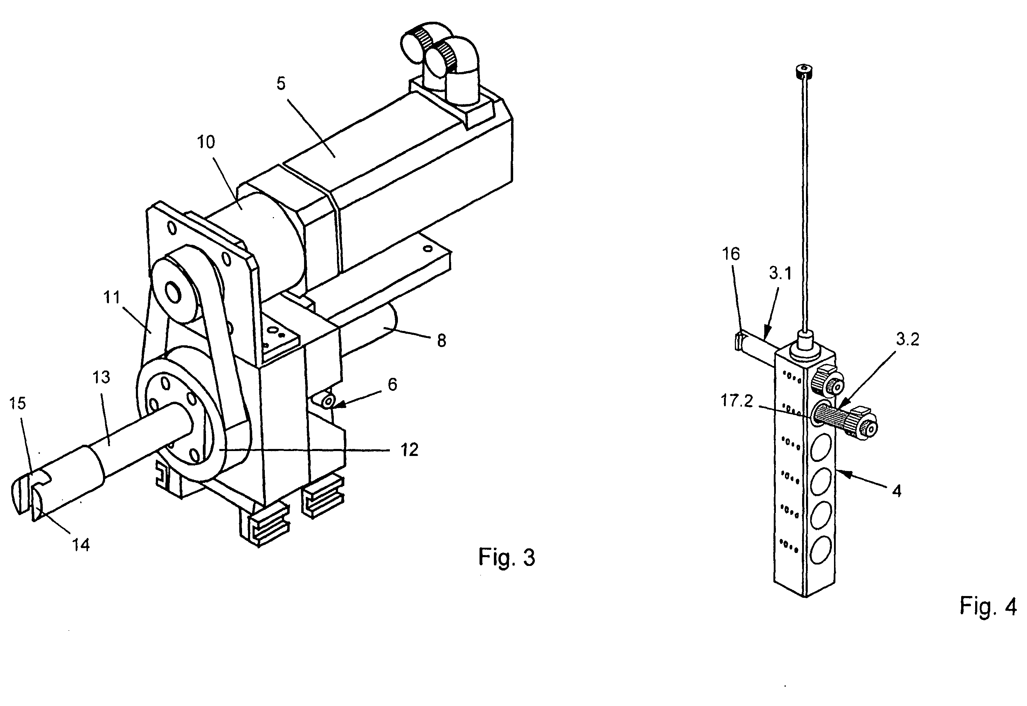

Eine Drehbewegung des Umformantriebes 5 wird über ein zwischengeschaltetes Getriebe 10 und einen Zahnriemen 11 auf eine Riemenscheibe 12 übertragen, die wiederum eine in Figur 3 gezeigte Kupplungsstange 13 antreibt.

Zum Verbinden der Kupplungsstange 13 mit einem Werkzeug weist die Kupplungsstange 13 in ihrer Stirnfläche 14 eine T-förmige Nut 15 auf, in die ein entsprechend geformter Nutenstein 16 (siehe Figur 4) des Werkzeuges 3.1 bzw. 3.2 einpasst.

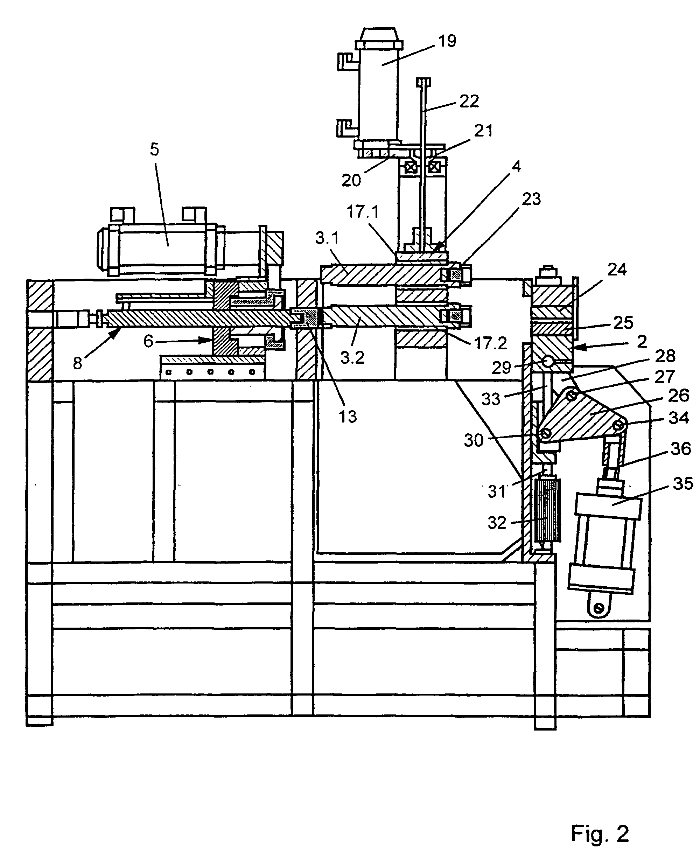

Die Werkzeuge 3.1 und 3.2 sitzen in insbesondere in Figur 2 erkennbaren Gleithülsen 17.1 und 17.2 und können in diesen Gleithülsen auf die Spanneinrichtung 2 zu bewegt werden.

Der Werkzeugwechsler 4 sitzt wiederum in einem vertikal ausgerichteten U-förmigen Rahmen 18 und ist diesem vertikal gleitbar angeordnet. Seine Bewegung in vertikaler Richtung wird von einem Antrieb 19 bewirkt, wobei der Antrieb 19 wiederum über einen Antriebsriemen 20 eine Spindelmutter 21 in Drehbewegung versetzt, welche mit einer Spindel 22 in Wirkverbindung steht, die wiederum von dem Werkzeugwechsler 4 abragt.

Stirnwärtig besitzt das Werkzeug 3.1 bzw. 3.2 einen Umformstempel 23.

Die Spanneinrichtung 2 weist eine obere Spannbacke 24 auf, welche in dem gezeigten Ausführungsbeispiel ortsfest angeordnet ist. Dieser oberen Spannbacke 24 ist eine untere Spannbacke 25 zugeordnet, die in vertikaler Richtung bewegbar ist. Hierzu ist der unteren Spannbacke 25 eine Kniehebeleinrichtung zugeordnet, deren zentrales Element eine dreieckförmige Drucklasche 26 ist. Die Drucklasche 26 ist in einer Ecke über ein Gelenk 27, einen Hebel 28 und ein weiteres Gelenk 29 mit der unteren Spannbacke 25 verbunden.

In etwa vertikaler linearer Ausrichtung weist die Drucklasche 26 eine weitere gelenkige Verbindung 30 mit einer Kolbenstange 31 eines Druckzylinders 32 auf, wobei die Drucklasche 26 an einer Führungsstange 33 geführt ist.

Die dritte Ecke der Drucklasche 26 ist über ein Gelenk 34 mit einem weiteren Druckzylinder 35 gekoppelt.

Die Funktionsweise der vorliegenden Erfindung ist folgende:

Beispielsweise ein Rohr wird zwischen die obere Spannbacke 24 und die untere Spannbacke 25 eingesetzt, wobei der grundsätzliche Abstand der oberen Spannbacke 24 und der unteren Spannbacke 25 mittels des Druckzylinders 32 eingestellt wird. Mittels dieses Druckzylinders 32 wird die Drucklasche 26 vertikal entlang der Führungsstange 33 verfahren, sodass sich die Lage der .gelenkigen Verbindung 30 vertikal verändert.

Das eigentliche Spannen geschieht mittels des Druckzylinders 35 und der Kolbenstange 36, wobei sich beim Ausfahren die Drucklasche 26 um die gelenkige Verbindung 30 dreht, sodass das Gelenk 27 in etwa in Ausrichtung mit der gelenkigen Verbindung 30 und dem Gelenk 29 gelangt. Hierdurch erfolgt eine günstige Abstützung der unteren Spannbacke 25 gegen die Kolbenstange 31 des Druckzylinders 32.

Der Schlitten 6 befindet sich in einer zurückgezogenen Position, in der sich die Kupplungsstange 13 ausser Eingriff mit einem Werkzeug 3.1 bzw. 3.2 befindet. Mittels des Antriebs 19 und dem Antriebsriemen 20 bzw. der Spindelmutter 21 und der Spindel 22 wird nun der Werkzeugwechsler 4 in eine Position gebracht, in der sich ein Werkzeug 3.1 bzw. 3.2 oberhalb oder auch unterhalb der Kupplungsstange 13 befindet, wobei der Nutenstein 16 auf das Einfahren in die T-förmige Nut ausgerichtet ist.

Der Schlitten 6 fährt jetzt nach vorne und die Kupplungsstange 13 mit der T-förmigen Nut in eine Position oberhalb oder unterhalb des Nutensteins. Der Antrieb 19 senkt oder hebt nun den Werkzeugwechsler 4 an, sodass der Nutenstein 16 in Eingriff mit der Nut 15 gelangt. Damit ist das Werkzeug 3.1 bzw. 3.2 mit dem Umformantrieb 5 gekoppelt.

Über den Schlitten 6 kann jetzt das Werkzeug auf das umzuformende Element hin bewegt werden, indem es in der Gleithülse 17.1 bzw. 17.2 gleitet. Durch Rotation des Werkzeuges 3.1 bzw. 3.2 mittels des Umformantriebes 5 über den Zahnriemen 11, die Riemenscheibe 12 und die Kupplungsstange 13 wird nun das längliche Element bearbeitet. Nach erfolgter Bearbeitung erfolgt ein Zurückfahren des Schlittens 6, wodurch das Werkzeug 3.1 bzw. 3.2 in seine Ausgangsposition zurückgelangt.

| **Positionszahlenliste** | | | | | |
|---|---|---|---|---|---|
| 1 | Maschinenrahmen | 34 | Gelenk | 67 | |
| 2 | Spanneinrichtung | 35 | Druckzylinder | 68 | |
| 3 | Werkzeug | 36 | Kolbenstange | 69 | |
| 4 | Werkzeugwechsler | 37 | | 70 | |
| 5 | Umformantrieb | 38 | | 71 | |
| 6 | Schlitten | 39 | | 72 | |
| 7 | Führung | 40 | | 73 | |
| 8 | Antrieb | 41 | | 74 | |
| 9 | Platte | 42 | | 75 | |
| 10 | Getriebe | 43 | | 76 | |
| 11 | Zahnriemen | 44 | | 77 | |
| 12 | Riemenscheibe | 45 | | 78 | |
| 13 | Kupplungsstange | 46 | | 79 | |
| 14 | Stirnfläche | 47 | | | |
| 15 | T-Nut | 48 | | | |
| 16 | Nutenstein | 49 | | | |
| 17 | Gleithülse | 50 | | | |
| 18 | Rahmen | 51 | | | |
| 19 | Antrieb | 52 | | | |
| 20 | Antriebsriemen | 53 | | | |
| 21 | Spindelmutter | 54 | | | |
| 22 | Spindel | 55 | | | |
| 23 | Umformstempel | 56 | | | |
| 24 | obere Spannbacke | 57 | | | |
| 25 | untere Spannbacke | 58 | | | |
| 26 | Drucklasche | 59 | | | |
| 27 | Gelenk | 60 | | | |
| 28 | Hebel | 61 | | | |
| 29 | Gelenk | 62 | | | |
| 30 | gelenkige Verbindung | 63 | | | |
| 31 | Kolbenstange | 64 | | | |
| 32 | Druckzylinder | 65 | | | |
| 33 | Führungsstange | 66 | | | |

## Patentansprüche

1. Vorrichtung zum axialen Umformen der Enden von länglichen Elementen, insbesondere von Rohren und Stangen, welche eingespannt in einer Spanneinrichtung (2), welche Spannbacken (24,25) aufweist, gehalten sind, mittels zumindest, einem Werkzeug (3.1, 3.2), dem ein Umformantrieb (5) zugeordnet ist, wobei zwischen dem Umformantrieb (5) und der Spanneinrichtung (2) ein Werkzeugwechsler (4) vorgesehen ist.
**dadurch gekennzeichnet,**
**dass** zumindest eine der Spannbacken (24, 25) mit einer Kniehebeleinrichtung verbunden ist.

2. Vorrichtung nach Anspruch 1, **dadurch gekennzeichnet, dass** der Umformantrieb (5) eine Kupplung zum lösbaren Ankuppeln an das Werkzeug (3.1, 3.2 ) aufweist.

3. Vorrichtung nach Anspruch 2, **dadurch gekennzeichnet, dass** in eine Stirnfläche (14) einer vom Umformantrieb (5) angetriebenen Kupplungsstange (13) eine T-Nut (15) eingeformt ist, in die ein T-förmiger Nutenstein (16) am Werkzeug (3.1, 3.2) passt.

4. Vorrichtung nach einem der Ansprüche 1 bis 3, **dadurch gekennzeichnet, dass** der Werkzeugwechsler (4) vertikal in einem Rahmen (18) bewegbar angeordnet ist.

5. Vorrichtung nach einem der Ansprüche 1 bis 4, **dadurch gekennzeichnet, dass** der Werkzeugwechsler (4) eine Reihe von Gleithülsen (17.1, 17.2) aufweist, in denen Werkzeuge (3.1, 3.2) gleitbar sitzen.

6. Vorrichtung nach wenigstens einem der Ansprüche 1 bis 5, **dadurch gekennzeichnet, dass** dem Werkzeugwechsler (4) ein Antrieb (19) zugeordnet ist.

7. Vorrichtung nach Anspruch 6, **dadurch gekennzeichnet, dass** mit dem Werkzeugwechsler (4) eine Spindel (22) verbunden ist, auf der eine von dem Antrieb (19) angetriebene Spindelmutter (21) aufsitzt.

8. Vorrichtung nach einem der Ansprüche 1 bis 7, **dadurch gekennzeichnet, dass** der Umformantrieb (5) über einen Zahnriemen (11) mit einer Zahnriemenscheibe (12) verbunden ist, welche die Kupplungsstange (13) antreibt.

9. Vorrichtung nach einem der Ansprüche 1 bis 8, **dadurch gekennzeichnet, dass** der Umformantrieb (5) einem Schlitten (6) aufsitzt, der auf bzw. an Führungen (7) gleitet.

10. Vorrichtung nach Anspruch 9, **dadurch gekennzeichnet, dass** dem Schlitten (6) ein pneumatischer oder hydraulischer Antrieb (8) zugeordnet ist.

11. Vorrichtung nach einem der Ansprüche 1 bis 10, **dadurch gekennzeichnet, dass** die eine Spannbacke (25) gelenkig mit einem Hebel (28) und dieser gelenkig mit einer Ecke einer dreiecksförmigen Drucklasche (26) verbunden ist.

12. Vorrichtung nach Anspruch 11, **dadurch gekennzeichnet, dass** die beiden weiteren Ecken der Drucklasche (26) gelenkig mit je einem Druckzylinder (32, 35) verbunden sind.

13. Vorrichtung nach Anspruch 12, **dadurch gekennzeichnet, dass** ein Druckzylinder (32) unterhalb der Spannbacke (25) angeordnet und der Hebel (28) in Ausrichtung mit diesem Druckzylinder (32) schwenkbar ist, wobei die gelenkige Verbindung (30) der Drucklasche (26) mit dem Druckzylinder (32) ortsfest verbleibt.

## Claims

1. Apparatus for the axial shaping of the ends of elongate elements, more especially pipes and rods, which are retained in a clamping means (2), which has clamping jaws (24, 25), in a clamped-in manner, by means of at least one tool (3.1, 3.2), with which a shaping drive (5) is associated, a tool changer (4) being provided between the shaping drive (5) and the clamping means (2), **characterised in that** at least one of the clamping jaws (24, 25) is connected to a toggle lever arrangement.

2. Apparatus according to claim 1, **characterised in that** the shaping drive (5) has a coupling for the detachable coupling with the tool (3.1, 3.2).

3. Apparatus according to claim 2, **characterised in that** a T-shaped groove (15) is provided in an end face (14) of a coupling rod (13) driven by the shaping drive (5), and a T-shaped groove block (16) on the tool (3.1, 3.2) fits into said groove.

4. Apparatus according to one of claims 1 to 3, **characterised in that** the tool changer (4) is displaceably disposed vertically in a frame (18).

5. Apparatus according to one of claims 1 to 4, **characterised in that** the tool changer (4) has a number of slide bushes (17.1, 17.2), in which tools (3.1, 3.2) slidably sit.

6. Apparatus according to at least one of claims 1 to 5, **characterised in that** a drive (19) is associated with the tool changer (4).

7. Apparatus according to claim 6, **characterised in that** a spindle (22) is connected to the tool changer (4), and a spindle nut (21), driven by the drive (19), sits on said spindle.

8. Apparatus according to one of claims 1 to 7, **characterised in that** the shaping drive (5) is connected, via a toothed belt (11), to a toothed belt pulley (12) which drives the coupling rod (13).

9. Apparatus according to one of claims 1 to 8, **characterised in that** the shaping drive (5) sits on a slide (6), which slides along or respectively on guides (7).

10. Apparatus according to claim 9, **characterised in that** a pneumatic or hydraulic drive (8) is associated with the slide (6).

11. Apparatus according to one of claims 1 to 10, **characterised in that** one clamping jaw (25) is pivotally connected to a lever (28), and said lever is pivotally connected to one corner of a triangular pressure lug (26).

12. Apparatus according to claim 11, **characterised in that** the two other comers of the pressure lug (26) are each pivotally connected to a respective pressure cylinder (32, 35).

13. Apparatus according to claim 12, **characterised in that** one pressure cylinder (32) is disposed beneath the clamping jaw (25), and the lever (28) is pivotable in alignment with said pressure cylinder (32), the pivotal connection (30) between the pressure lug (26) and the pressure cylinder (32) remaining stationary.

## Revendications

1. Dispositif pour le façonnage axial des extrémités d'éléments allongés, en particulier de tuyaux et de barres, qui sont maintenus serrés dans un dispositif de serrage (2), présentant des mâchoires de serrage (24, 25), au moyen d'au moins un outil (3.1, 3.2) auquel est associé un entraînement de façonnage (5), entre l'entraînement de façonnage (5) et le dispositif de serrage (2) étant prévu un échangeur d'outil (4),
**caractérisé par le fait qu'**au moins l'une des mâchoires de serrage (24, 25) est reliée à un dispositif de levier coudé.

2. Dispositif selon la revendication 1, **caractérisé par le fait que** l'entraînement de façonnage (5) présente un couplage destiné au couplage amovible à l'outil (3.1, 3.2).

3. Dispositif selon la revendication 2, **caractérisé par le fait que** dans une face frontale (14) d'une tige de couplage (13) entraînée par l'entraînement de façonnage (5) est formée une rainure en «T» (15) dans laquelle une languette-écrou en «T» s'adapte sur l'outil (3.1, 3.2).

4. Dispositif selon l'une des revendications 1 à 3, **caractérisé par le fait que** l'échangeur d'outil (4) est disposé mobile verticalement dans un cadre (18).

5. Dispositif selon l'une des revendications 1 à 4, **caractérisé par le fait que** l'échangeur d'outil (3) présente une série de manchons de coulissement (17.1, 17.2) dans lesquels sont placés, de manière coulissante, les outils (3.1, 3.2).

6. Dispositif selon au moins l'une des revendications 1 à 5, **caractérisé par le fait qu'**à l'échangeur d'outil (4) est associé un entraînement (19).

7. Dispositif selon la revendication 6, **caractérisé par le fait qu'**à l'échangeur d'outil (4) est connectée une broche (22) sur lequel se trouve un écrou de broche (21) entraîné par l'entraînement (19).

8. Dispositif selon l'une des revendications 1 à 7, **caractérisé par le fait que** l'entraînement de façonnage (5) est relié, par l'intermédiaire d'une courroie dentée (11), à une poulie à courroie dentée (12) qui entraîne le tige de couplage (13).

9. Dispositif selon l'une des revendications 1 à 8, **caractérisé par le fait que** l'entraînement de façonnage (5) se trouve sur un chariot (6) qui coulisse sur ou le long de guides (7).

10. Dispositif selon la revendication 9, **caractérisé par le fait qu'**au chariot (6) est associé un entraînement pneumatique ou hydraulique (8).

11. Dispositif selon l'une des revendications 1 à 10, **caractérisé par le fait que** l'une des mâchoires de serrage (25) est connectée, de manière articulée, à un levier (28) et que ce dernier est connecté, de manière articulée, à un coin d'une collerette de pression (26) de forme triangulaire.

12. Dispositif selon la revendication 11, **caractérisé par le fait que** les deux autres coins de la collerette de pression (26) sont connectés, chacun, de manière articulée, à un cylindre de pression (32, 35).

13. Dispositif selon la revendication 12, **caractérisé par le fait qu'**un cylindre de pression (32) est disposé au-dessous de la mâchoire de serrage (25) et que le levier (28) peut pivoter en alignement avec ce cylindre de pression (32), la connexion articulée (30) entre la collerette de pression (32) et le cylindre de pression (32) restant stationnaire.
